# EUROPEAN PATENT SPECIFICATION

(11) **EP 1 399 775 B1**
(45) Date of publication and mention of the grant of the patent: **30.11.2005**
(21) Application number: 02714997.0
(22) Date of filing: 25.02.2002
(51) Int. Cl.: G02C 5/00

(54) **EYEWEAR**
BRILLE
LUNETTES

(30) Priority: 23.02.2001 CA 2337940
(43) Date of publication of application: 24.03.2004
(73) Proprietor: Cabot Safety Intermediate Corporation, Newark, DE 19713 (US)
(72) Inventor: BLANCHETTE, Luc, Montreal, Quebec H2J 4C9 (CA); PERNICKA, Martin, Laval, Quebec H7V 1S2 (CA)
(74) Representative: Müller, Frank Peter
(86) International application number: PCT/US2002/005786
(87) International publication number: WO 2002/069021

(56) References cited:
- EP-A- 0 880 044
- US-A- 5 418 581
- US-A- 5 539 561
- US-A- 5 555 038
- US-A- 5 987 653
- US-A- 6 007 199

## Description

### Field of the invention

The present invention pertains to an eyewear of the type comprising a lens and a pair of detachable ear stems.

### Background of the invention

There exists, at present, some optical devices which comprise an unitary arcuate lens and a pair of detachable ear stems extending from opposite lateral sides of the lens. In most cases, such as illustrated in U.S. Patent No. 5,249,001 issued September 28, 1993 to Jannard, there are additional components needed to secure the ear stems to the lens, such as pins, which must be removed whenever it is desired to replace ear stems or a damaged lens.

An eyewear comprising a front frame with a generally T-shaped member extruding sidewardly therefrom, and two ear stems, is disclosed in US 5,418,581, wherein each of the ear stems defines a recess for frictionally holding the T-shaped member.

### Objects and statement of the invention

It is an object of the present invention to provide an eyewear which consists solely of three components, namely, a lens and a pair of ear stems, the latter being easily detachable from the lens.

It is also an object of the present invention to provide an eyewear in which the pair of stems are mounted directly to the lens without any additional components.

The present invention therefore relates to an eyewear which comprises a unitary arcuate lens having its opposite lateral sides receiving a pair of detachable ear stems which are adapted to move from an inwardly folded position to an outwardly ear contacting position. The lens displays, at each lateral side, an opening and a stem connecting portion which defines a hinge element and forms an integral part of the lens.

The proximal end portion of the stem defines a U-shaped recess having a constricted entry and being engageable with the hinge element. This proximal end has some resiliency enabling a snap-in engagement and a snap-out disengagement of the ear stem directly onto and from the lens. No additional component is required to this three-piece eyewear.

The U-shaped recess is defined by a pair of branches, one of the branches being longer than the other branch and forming part of a means for limiting outward movement of said ear stem to its ear contacting position. The longer branch comprises a protuberance on an inner face thereof; said lens including a second opening to receive said protuberance of said longer branch therein.
In an embodiment of the invention, the hinge element has a generally cylindrical shape, but includes a longitudinal projection on its outer wall to thereby provide a restrictive movement of the ear stem during passage between the folded position to the outwardly extending position, or vice-versa.
Other objects and further scope of applicability of the presently disclosed eyewear will become apparent from the detailed description given hereinafter. It should be understand, however, that this detailed description, while indicating preferred embodiments of this invention, is given by way of illustration only since various changes and modifications within the scope of the appended claims will become apparent to those skilled in the art.

### In the drawings

Figure 1 is a perspective view of an eyewear made in accordance with the present invention;
Figure 2 is a side elevational view of the eyewear;
Figure 3 is a cross-sectional view taken along lines 3-3 of Figure 1;
Figure 4 is a perspective view of the eyewear showing one ear stem in the inwardly folded position; and
Figure 5 is a cross-sectional view taken along lines 5-5 of Figure 4.

### Description of exemplary embodiments

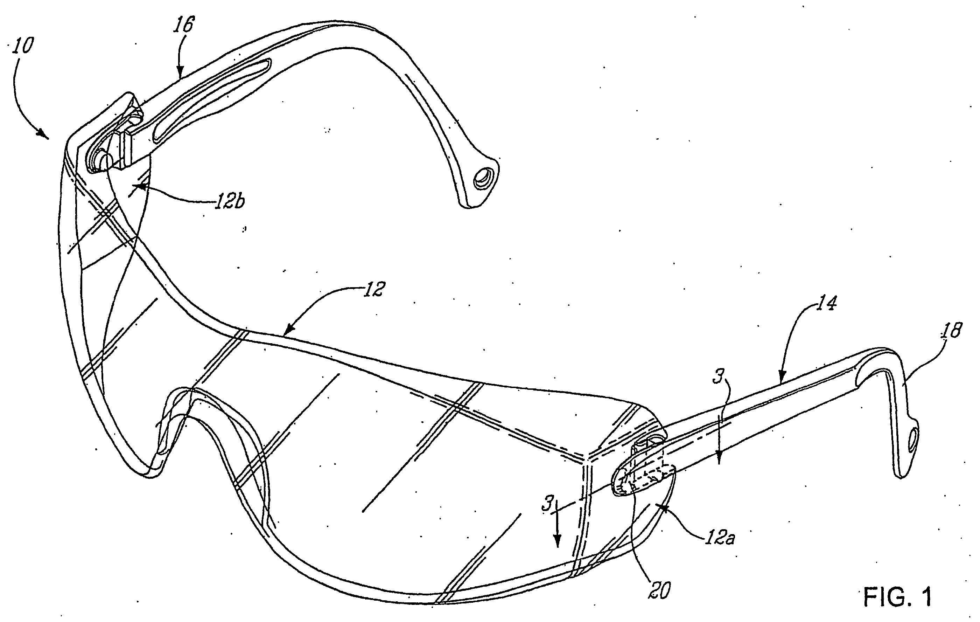

Referring to Figure 1, there is shown an eyewear, generally denoted 10, comprising three components, namely, a unitary arcuate lens 12 made of transparent transparent plastic material and a pair of ear stems 14 and 16 which are identical in construction and which are mounted to respective opposite lateral sides 12a and 12b of the lens.

The ear stems 14 and 16 being identical in shape, a description will be given with respect to one ear stem only.

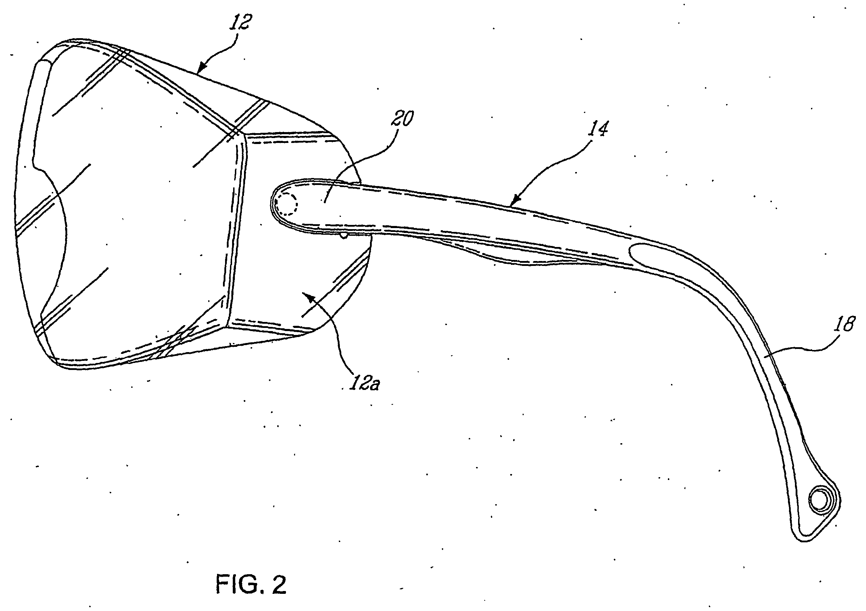

Referring also to Figures 2, 3 and 4, the ear stem 14 comprises an ear contacting distal end portion 18 and a proximal end lens contacting portion 20. The lateral side portion 12a of the lens 12 comprises an oblong-shaped recessed area 22 displaying a rectangular-shaped opening 24 and a circular opening 26.

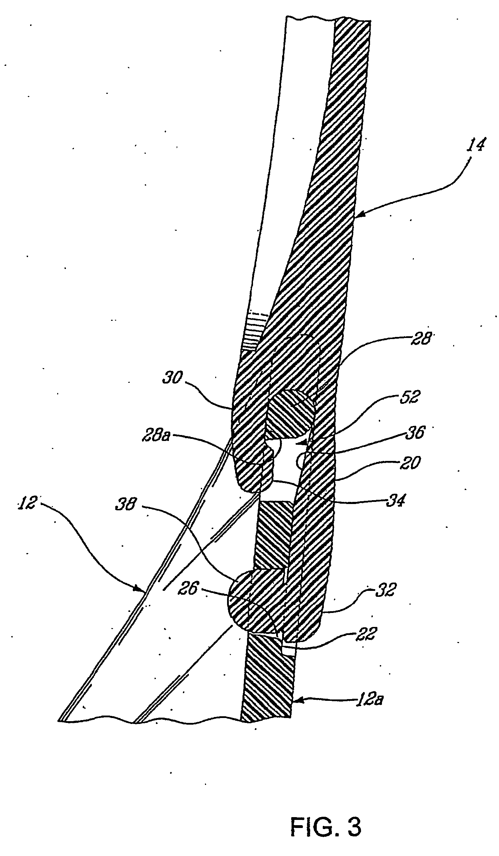

To one side of the opening 24, remote from the opening 26, is a vertically extending column 28 which, as illustrated in Figure 3, has a generally cylindrical shape except for a longitudinal projection portion 28a on its outer wall. As explained further hereinbelow, the column 28 serves as a hinge element for the ear stem 14; it forms an integral part of the lens.

The proximal end 20 of the ear stem defines a U-shaped recess defined by a pair of branches 30 and 32. Branch 30 is shorter than branch 32 and has an enlarged extremity 34 which defines with the opposite inner face 36 of the longer branch 32 a constricted recess entry which is slightly smaller than the overall outer diameter of the cylindrical-shaped hinge element 28. Branch 32 has an oblong shape corresponding to the oblong shape of the recessed area 24 so as to be lodged therein when the ear stems are in the ear contacting position.

The inner face of the longer branch 32 displays a dome-shaped protuberance 38 which is so dimensioned as to be received in the circular opening 26 of the lens when the ear stem is in its ear contacting position.

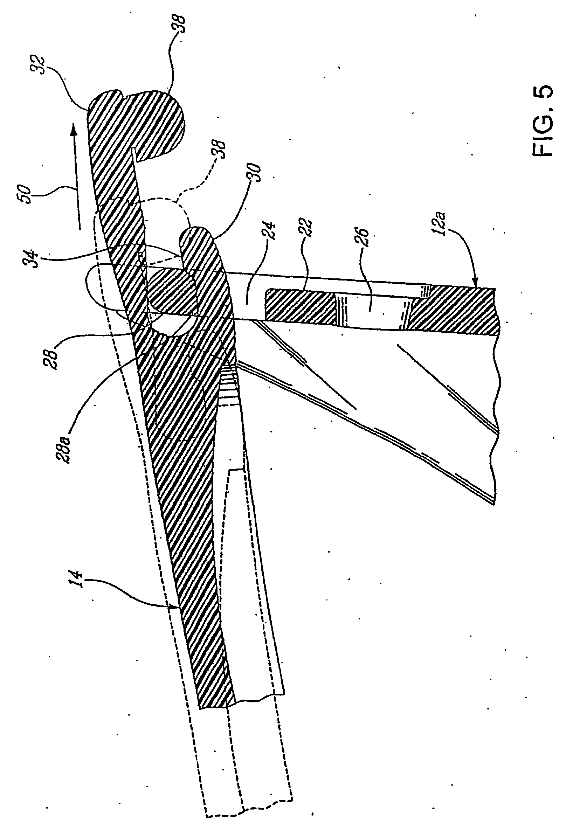

Referring to Figure 5, the mounting of the ear stem to the lens is indicated by arrow 50 whereby the U-shaped recess at the proximal end of the ear stem engages the hinge element 28 of the lens. The material of the ear stem, at least in the proximal end portion thereof, is resilient, such as plastic material, so that this engagement of the ear stem to the hinge element may be carried out by forcing entry of the branches so that the latter will slightly open to allow lodging of the hinge element in the receptive area 52 between the branches. This enables a snap-in engagement of the ear stem to the lens or, in a direction opposite to arrow 50, a snap-out disengagement of the ear stem from the lens.

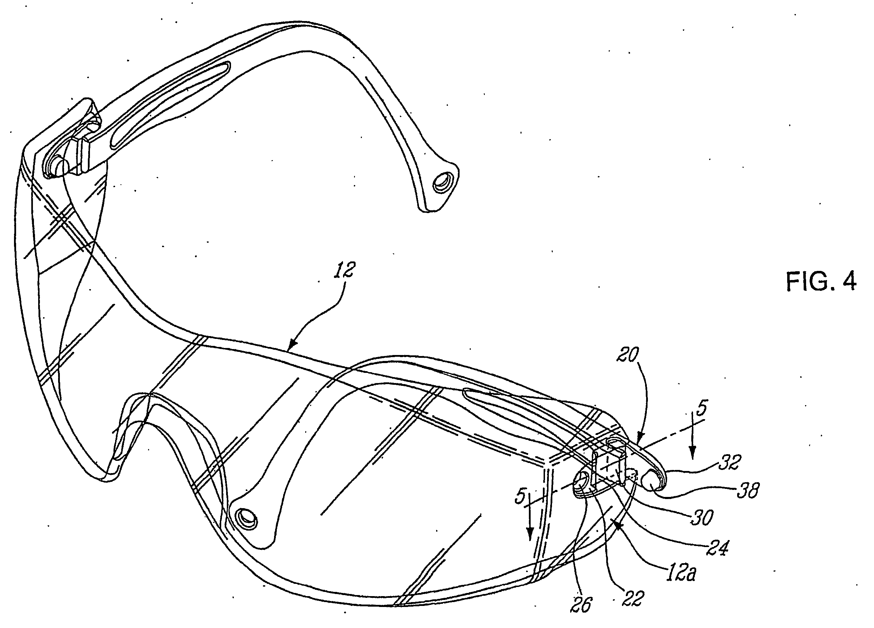

The ear stem is limited, in its outward movement, by branch portion 32 contacting the recessed lens area 24. This entry of protuberance 38 in the circular opening 25 also assists in securing the ear stem in its outward position. To maintain the ear stem in either the inwardly folded position of Figure 4, or the ear contacting position shown in Figure 1, the presence of the projection 28a on the outer wall of the hinge element 28 will prevent free pivotal movement of the ear stem due to the larger surface area of the hinge element with the inner face of the shorter branch such as illustrated in Figures 3 and 5.

As can be seen in Figure 5, the branch 30 has its end portion extending through the opening 24 when the ear stem is in its inwardly folded position.

Although the invention has been described above with respect to one specific form, it will be evident to the person skilled in the art that it may be refined and modified in various ways. It is therefore wished to have it understood that the present invention should not be limited in interpretation except by the terms of the following claims.

## Claims

1. Eyewear (10) comprising an unitary arcuate lens (12) having opposite lateral sides (12a, 12b) and a pair of detachable ear stems (14, 16) mounted at said opposite lateral sides of said lens and being adapted to move from an inwardly folded position to an outwardly ear contacting position; said lens displaying, at each said lateral side, an opening (24) and a stem connecting portion located adjacent said opening and defining a hinge element (28) forming an integral part of said lens; each said ear stem (14, 16) having an ear contacting distal end portion (18) and a lens engaging proximal end portion (20); said proximal end portion (20) defining a U-shaped recess engageable with said hinge element; said recess displaying a constricted entry and being formed of resilient material to thereby enable a snap-in engagement and a snap-out disengagement; said hinge element (28) and said opening (24) allowing said proximal end (20) of said ear stem to move from said folded position to and from said outwardly ear contacting position, said eyewear (10) further comprising means for limiting outward movement of said ear stem to said ear contacting position, wherein said U-shaped recess is defined by a pair of branches (30, 32), one of said branches (32) being longer than the other; said limiting means consisting of said longer branch contacting said lens,
**characterized in that**,
said longer branch (32) comprises a protuberance (38) on an inner face thereof; said lens including, adjacent said opening (24) remote from said hinge element, a second opening (26) to receive said protuberance on said longer branch (32) therein, when said ear stem is in the outwardly ear contacting position.

2. Eyewear (10) as defined in claim 1, wherein said hinge element (28) has a generally cylindrical shape including a longitudinal projection (28) on its outer wall to thereby provide restrictive movement of said ear stem (14, 16) during movement between said folded position and said outwardly extending position.

3. Eyewear (10) as defined in claim 1, wherein a portion of said shorter branch (30) extends in said opening (24) when said ear stem (14, 16) is in said inwardly folded position.

## Patentansprüche

1. Brille (10), umfassend eine bogenförmige Brillenglas-Einheit (12) mit einander gegenüberliegenden Querseiten (12a, 12b) und ein Paar lösbare Ohrbügel (14, 16), die an den einander gegenüberliegenden Querseiten des Brillenglases befestigt sind, und die eingerichtet sind, um sich von einer einwärts gefalteten Position auf eine Ohrkontaktposition nach außen zu bewegen, das Brillenglas weist auf jeder der Querseiten eine Öffnung (24) und einen an die Öffnung angrenzenden Bügelbefestigungsteil auf und definiert ein Gelenkelement (28), das einen integralen Teil des Brillenglases bildet, jeder der Ohrbügel (14, 16) hat einen distalen Endteil (18), der mit dem Ohr in Berührung ist, und einen in das Brillenglas eingreifenden proximalen Endteil (20), der proximale Endteil (20) definiert eine U-förmige Ausnehmung, die mit dem Gelenkelement in Eingriff gebracht werden kann, die Ausnehmung stellt einen verengten Eintritt dar und ist aus einem elastischen Material gebildet, so dass Rasteingriff und Lösen durch Ausrasten möglich sind, das Gelenkelement (28) und die Öffnung (24) ermöglichen die Bewegung des proximalen Endes (20) des Ohrbügels von einer gefalteten Position zu der Ohrkontaktposition und von dieser weg, die Brille (10) umfasst des Weiteren Mittel zum Begrenzen der Auswärtsbewegung des Ohrbügels zu der Ohrkontaktposition, wobei die U-förmige Ausnehmung durch ein Paar Schenkel (30, 32) definiert ist, einer der Schenkel (32) länger als der andere ist und das Begrenzungsmittel aus dem längeren Schenkel, der in Kontakt mit dem Brillenglas ist, besteht,
**dadurch gekennzeichnet, dass**
der längere Schenkel (32) auf einer Innenfläche davon eine Ausstülpung (38) umfasst, das Brillenglas angrenzend an die Öffnung (24), entfernt von dem Gelenkelement liegend, eine zweite Öffnung (26) enthält, um darin die Ausstülpung des längeren Schenkels (32) aufzunehmen, wenn der Ohrbügel in der das Ohr berührenden Auswärtsposition ist.

2. Brille (10) nach Anspruch 1, wobei das Gelenkelement (28) eine generell zylindrische Form aufweist und einen längs laufenden überstehenden Teil (28) auf seiner Außenwand enthält, um **dadurch** Bewegungsbeschränkung des Ohrbügels (14, 16) während der Bewegung zwischen der gefalteten Position und der sich nach außen erstreckenden Position bereitzustellen.

3. Brille (10) nach Anspruch 1, wobei sich ein Teil des kürzeren Schenkels (30) in die Öffnung (24) erstreckt, wenn der Ohrbügel (14, 16) in der nach innen gefalteten Position ist.

## Revendications

1. Article de lunetterie (10) comprenant une lentille unitaire de forme arquée (12) ayant des côtés latéraux opposés (12a, 12b) et une paire de branches détachables (14, 16) qui sont montées au niveau desdits côtés latéraux opposés et qui sont adaptées de façon à pouvoir se déplacer depuis une position repliée vers l'intérieur jusqu'à une position vers l'extérieur qui est en contact avec les oreilles ; ladite lentille offrant, au niveau de chaque côté opposé, une ouverture (24) et une section de raccordement de branche qui est positionnée de façon adjacente à ladite ouverture et qui définit un élément de charnière (28) lequel fait partie intégrante de ladite lentille ; chaque ladite branche (14, 16) possédant une section d'extrémité distale (18) qui est en contact avec l'oreille et une section d'extrémité proximale (20) qui s'engage avec la lentille ; ladite section d'extrémité proximale (20) définissant un évidement en forme d'U apte à s'engager avec ledit élément de charnière ; ledit évidement présentant un orifice d'entrée réduit et étant fabriqué avec un matériau élastique ce qui permet, par conséquent, de procurer un enclenchement instantané et un désenclenchement instantané ; ledit élément de charnière (28) et ladite ouverture (24) permettant à ladite extrémité proximale (20) de ladite branche de se déplacer depuis ladite position repliée jusqu'à ladite position vers l'extérieur en contact avec les oreilles, et à partir de celle-ci, ledit article de lunetterie (10) comprenant en outre un moyen servant à limiter le mouvement vers l'extérieur de ladite branche par rapport à ladite position de contact avec l'oreille, cas dans lequel ledit évidement en forme d'U est défini par une paire de pattes (30, 32), l'une desdites pattes (32) étant plus longue que l'autre ; ledit moyen de limitation étant constitué de ladite patte plus longue qui est en contact avec ladite lentille,
**caractérisé en ce que**
ladite patte plus longue (32) comprend une saillie (38) sur une face interne de celle-ci ; ladite lentille incluant, de façon adjacente à ladite ouverture (24) loin dudit élément de charnière, une deuxième ouverture (26) afin d'y recevoir ladite saillie sur ladite patte plus longue (32), lorsque ladite branche se trouve dans la position vers l'extérieur en contact avec l'oreille.

2. Article de lunetterie (10), selon la définition de la revendication 1, dans lequel ledit élément de charnière (28) possède une forme généralement cylindrique incluant une projection longitudinale (28) sur sa paroi externe afin de procurer par conséquent un mouvement restrictif de ladite branche (14, 16) pendant le déplacement entre ladite position repliée et ladite position s'étendant vers l'extérieur.

3. Article de lunetterie (10), selon la définition de la revendication 1, dans lequel une section de ladite patte plus courte (30) s'étend dans ladite ouverture (24) lorsque ladite branche (14, 16) se trouve dans ladite position repliée vers l'intérieur.
